# EUROPÄISCHE PATENTANMELDUNG

(11) **EP 1 930 106 A2**
(43) Veröffentlichungstag der Anmeldung: **11.06.2008**
(21) Anmeldenummer: 07023660.9
(22) Anmeldetag: 06.12.2007
(51) Int. Cl.: B23B 31/00, B23B 31/26

(54) **Schnellspannfutter**

(30) Priorität: 07.12.2006 DE 102006058020
(71) Anmelder: Reinauer, Josef, 72488 Sigmaringen/Laiz (DE)
(72) Erfinder: Reinauer, Josef, 72488 Sigmaringen/Laiz (DE)

(57) **Zusammenfassung**

Es wird ein Schnellspannfutter (7) mit einem zentral angeordneten Verbindungsstück (9) vorgeschlagen, das zur Drehmomentübertragung von einer Werkzeugmaschine auf ein Werkzeug zwischen einem werkzeugmaschinenseitigen Halteteil (1) und einem werkzeugseitigen Halteteil (2) des Schnellspannfutters (7) eingesetzt wird. Das Verbindungsstück (9) in Form einer Bundschraube weist einen Zapfen (4) in Form eines Sechskants auf, welcher formschlüssig in Eingriff mit einer entsprechendengeformten Aufnahmeöffnung auf Seiten des werkzeugseitigen Halteteils (2) bringbar ist.

## Beschreibung

Die vorliegende Erfindung betrifft ein Schnellspannfutter zum Spannen von rotierenden Werkzeugen.

Ein als Schnellwechselfutter bezeichnetes Schnellspannfutter für Gewindebohrer ist aus der DE 39 02 559 A1 bekannt. Das Schnellspannfutter weist einen Schnellwechseleinsatz auf, welcher zur Drehmomentübertragung an- bzw. abkuppelbar ist. Eine Drehmitnahme des Schnellwechseleinsatzes erfolgt wie üblich über mehrere Haltekugeln, die jeweils in einer Radialöffnung einer Zylinderwandung eines Gehäuses gehalten werden, in das der Schnellwechseleinsatz eingeführt wird.
Aufgabe der Erfindung ist es, ein Schnellspannfutter bereitzustellen, das es ermöglicht, schnell und einfach Werkzeuge zu wechseln.

Diese Aufgabe wird durch ein Schnellspannfutter mit den Merkmalen des Anspruchs 1 gelöst. Vorteilhafte Weiterbildungen sind Gegenstand abhängiger Ansprüche.

Zur Drehmomentübertragung von der Werkzeugmaschinenspindel zum Werkzeug weist das Verbindungsstück des Schnellspannfutters in einer bevorzugten Ausführungsform einen Zapfen auf, welcher lösbar mit einer Grundaufnahme verbunden wird. Der Zapfen hat eine Außenkontur in Form eines Sechskants und ist in einem in die Grundaufnahme eingeführten Zustand formschlüssig mit der Grundaufnahme verbunden. Dabei wirken mehrere Verriegelungskörper des Schnellspannfutters mit radialen Ausnehmungen der Grundaufnahme zusammen.

In den Zeichnungen ist ein Ausführungsbeispiel der Erfindung dargestellt und wird unter Angabe weiterer Vorteile und Einzelheiten näher erläutert.

### Es zeigen,

Fig. 1 zeigt in dreidimensionaler Ansicht ein erfindungsgemäßes Schnellspannfutter im zusammengebauten Zustand.
Fig. 2 zeigt im Schnitt einen Futterkörper des erfindungsgemäßen Schnellspannfutters mit einem dazugehörigen Verbindungsstück in Form einer Bundschraube.
Fig. 3 zeigt im Schnitt eine Grundaufnahme des erfindungsgemäßen Schnellspannfutters.
Fig. 4 zeigt im Schnitt das erfindungsgemäße Schnellspannfutter in einer Spannstellung.
Fig. 5 zeigt im Schnitt das erfindungsgemäße Schnellspannfutter in einer Lösestellung.
Fig. 6 zeigt im Schnitt das erfindungsgemäße Schnellspannfutter in gelöster Stellung.
Fig. 7 zeigt in dreidimensionaler Ansicht den Futterköper.
Fig. 8 zeigt eine sternförmige Außenkontur der Grundaufnahme in einer Draufansicht.
Fig. 9 zeigt das Verbindungsstück mit einem Zapfen und einem maschinenseitigen Halteteil.

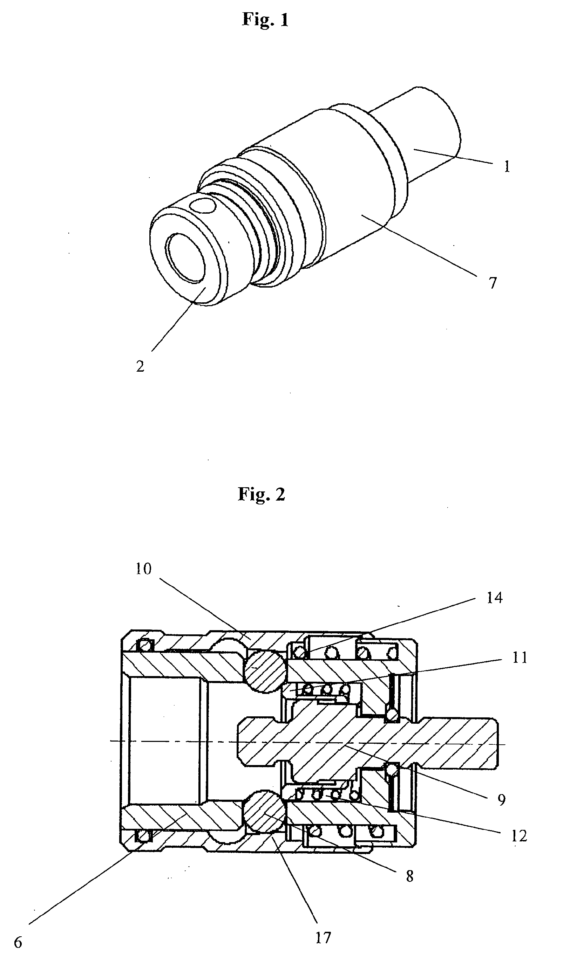

Die Fig. 1 zeigt ein Schnellspannfutter 7 mit einem maschinenseitigen Halteteil 1 und einem werkzeugseitigen Halteteil 2 in Form eines Schnellwechseleinsatzes bzw. (im Folgenden:) einer Grundaufnahme 3. Das maschinenseitige Halteteil 1 besitzt ein Gewinde, dass fest in eine (nicht gezeigte) Maschinenspindel eingeschraubt wird und zur Übertragung eines Drehmoments von der Maschinenspindel dient. Das werkzeugseitige Halteteil 2 ist hier als Grundaufnahme 3 mit einer stirnseitigen Aufnahmeöffnung 5 ausgebildet, in die ein Werkzeug bzw. ein Werkzeugeinsatz eingesteckt werden kann.

Die Fig. 2 zeigt einen Futterkörper 6 des Schnellspannfutters 7, der in einer zylindrischen Wandung in Umfangsrichtung im selben Winkelabstand angeordnete Haltekugeln 8 aufweist, die zur Arretierung der Grundaufnahme 3 im Futterkörper 6 des Schnellspannfutters 7 dienen. Die Haltekugeln 8 werden in dem in Fig. 2 gezeigten Zustand anders als bei gattungsähnlichen Schnellspannfuttern nicht in einem Käfig sondern gehalten, sondern sind zwischen einer Spannhülse 10 und einem Entriegelungsring 11 angeordnet. Der Entriegelungsring 11 erfährt von einer Druckfeder 12 eine Druckkraft und überträgt die Druckkraft auf die Haltekugeln 8. Dadurch wird sichergestellt, dass bei einer Betätigung des Schnellspannfutters 7 ohne Grundaufnahme 3 die Haltekugeln 8 nicht herausfallen können. Eine zwischen der Spannhülse 10 und dem Futterkörper 6 angeordnete Druckfeder 14 ist an ihrem einen Ende in Richtung des maschinenseitigen Endes des Futterkörpers 6 am Boden einer im Futterkörper 6 ausgebildeten Ringnut 15 abgestützt. Das andere Ende der Druckfeder 14 stützt sich in einer radialen Ausnehmung in der Spannhülse 10 ab.

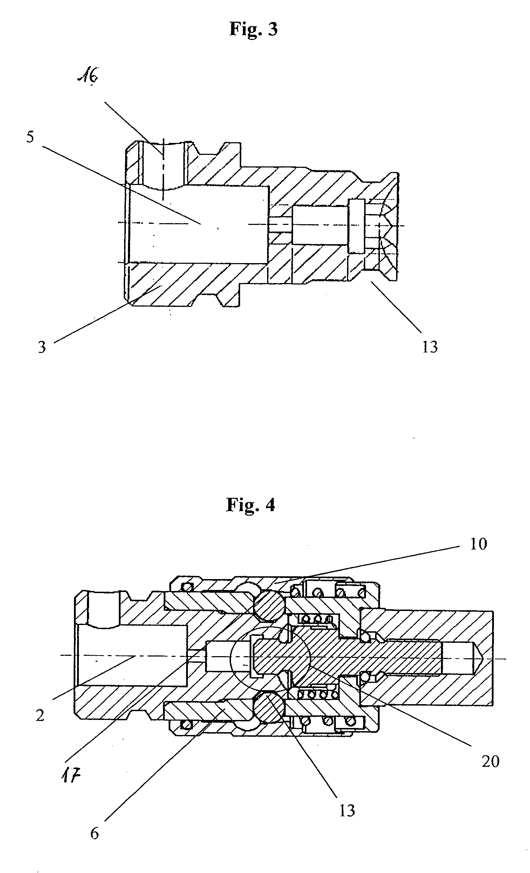

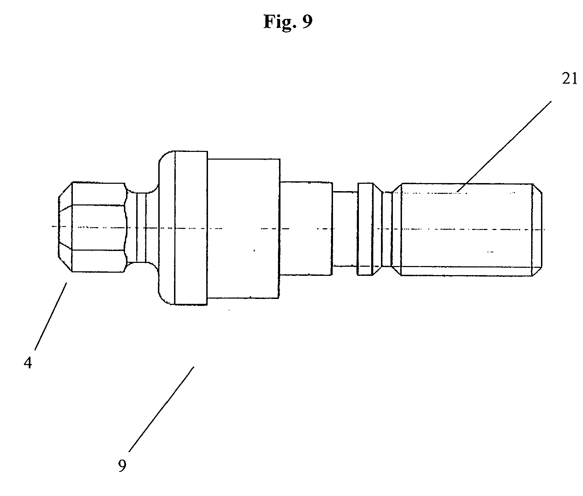

Fig. 3 zeigt die Grundaufnahme 3, in deren Aufnahmeöffnung 5 das (nicht gezeigte) Werkzeug eingesteckt und mit einem (nicht gezeigten) Verbindungsstift oder einer (nicht gezeigten) Schraube in einer radialen Bohrung 16 drehmomentübertragend und in axiale Richtung gehalten wird. Eine Drehmitnahme der in den Futterkörper 6 eingesetzten Grundaufnahme 3 erfolgt über einen an einem Verbindungsstück 9 (vgl. Fig. 9) ausgebildeten Zapfen 4 in Form eines Außensechskants. Der Zapfen 4 ist in eine Aufnahmeöffnung auf Seiten der Grundaufnahme 3 einführbar, die die Form eines Innensechskants mit einer an einer Stirnseite der Grundaufnahme 3 ausgebildeten sternenförmigen Außenkontur hat.

Bei gattungsähnlichen Schnellspannfuttern erfolgt die Drehmomentübertragung über mehrere am Umfang in einer Zylinderwandung eines Gehäuses verteilten Haltekugeln, durch die konstruktive Ausgestaltung auf mehreren Elementen aufbaut und somit aufwendiger und kostenintensiver ist und keine zentrale Drehmomentübertragung erfolgt. Bei dem erfindungsgemäßen Schnellspannfutter 7 erfolgt eine formschlüssige Arretierung der Grundaufnahme 3 im Futterkörper 6 über die Haltekugeln 8, die in einer radialen Ausnehmung 13 am Außenumfang der Grundaufnahme 3 zum sitzen kommen. Die zur Aufnahme eines Werkzeugs zum Bohren konzipierte Grundaufnahme 3 ist aus einem Stück gefertigt und mit dem maschinenseitigen Halteteil 1 lösbar verbunden.

DieFig. 4 zeigt das Schnellspannfutter 7 in seiner Spannstellung, in der die in den radialen Bohrungen 18 im Futterkörper 6 gehaltenen Haltekugeln 8 in der radialen Ausnehmung 13 der Grundaufnahme 3 eingreifen und damit zwischen der Spannhülse 10 und der Grundaufnahme 3 angeordnet sind. Die Spannhülse 10 hat eine geschlossene Position eingenommen, in der sie über eine keilförmige Fläche 17 (vgl. Fig. 2) an den Haltekugeln 8 anliegt, wodurch eine erhöhte radiale Kraft auf die Haltekugeln 8 ausgeübt wird. Die wechselseitig korrespondierenden Druckkräfte der beiden Druckfedern 12, 14 im Schnellspannfutter 7 gewährleisten eine in Radialrichtung störungsfreie Bewegung der Haltekugeln 8 relativ zum bzw. eine genaue Positionierung der Haltekugeln 8 im Futterkörper 6.

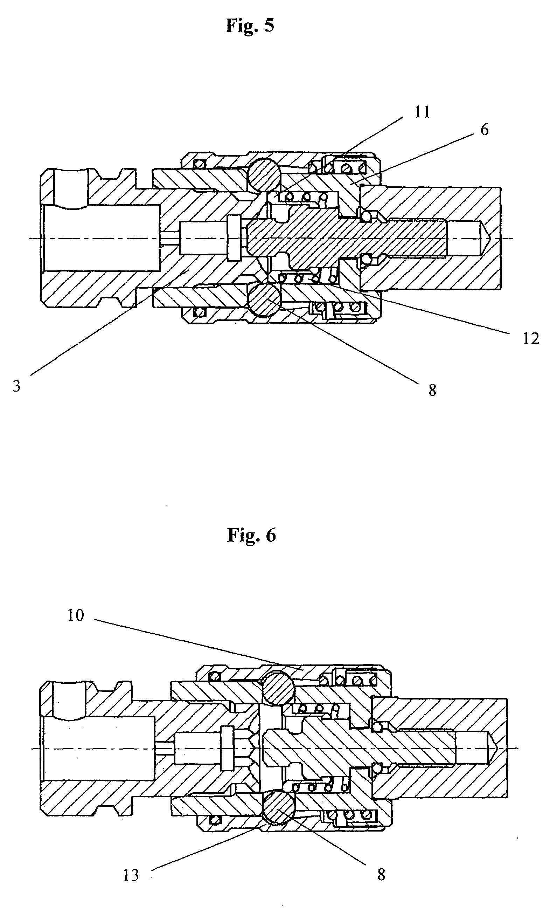

Fig. 5 zeigt das Schnellspannfutter 7 in seiner Lösestellung. Der Bodenabschnitt der Grundaufnahme 3 befindet sich radial innerhalb der Haltekugeln 8. Die Haltekugeln 8 werden beim axialen Ausfahren der Grundaufnahme 3 aus dem Futterkörper 6 in die Richtung des werkzeugseitigen Halteteils über den Bodenabschnitt der Grundaufnahme 3 radial nach außen gedrückt. Dabei wird ein Entriegelungsring 11 axial bis zu den Haltekugeln 8 synchron mit der Bewegung der Grundaufnahme 3 durch die Druckkraft der Druckfeder 12 in die Richtung der Grundaufnahme 3 bewegt, wodurch ein Herausfallen bzw. eine Verschiebung der Haltekugeln 8 radial nach innen verhindert wird. Bei der synchronen axialen Bewegung des Entriegelungsrings 11 in Richtung der Grundaufnahme 3 unterstützt der mit der Federkraft der Druckfeder 12 beaufschlagte Entriegelungsring 11 den Werkzeugwechsel, indem er einen Druck auf die Grundaufnahme 3 ausübt und dadurch den Werkzeugwechsel erleichtert bzw. automatisiert.

Fig. 6 zeigt das Schnellspannfutter in seiner Lösestellung, in der sich die Spannhülse 10 in einer geöffneten Stellung befindet. Um die geöffnete Stellung der Spannhülse 10 zu erhalten, wird die Spannhülse 10 axial in eine Richtung hin zum maschinenseitigen Halteteil 1 bewegt, bis sich die Haltekugeln 8 jeweils in einer radialen Ausnehmung der Spannhülse 10 einfinden, wo sie über die Druckkraft des Entriegelungsrings 11 in Position gehalten werden.

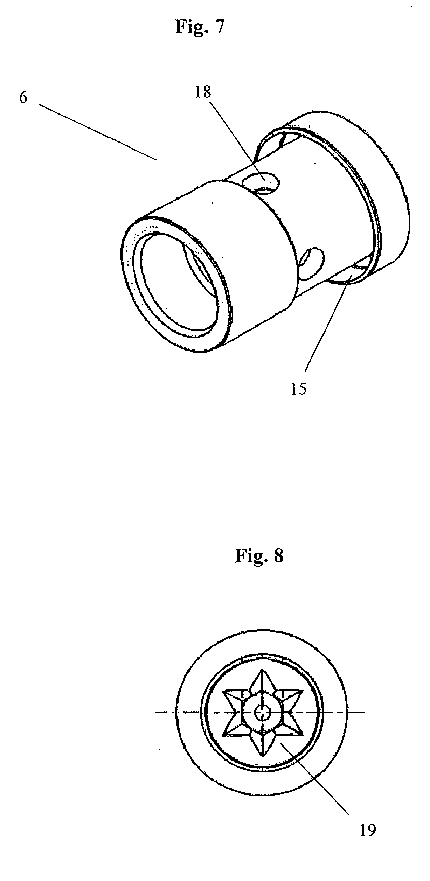

Die Fig. 7 zeigt den Futterkörper 6 des Schnellspannfutters 7, der in seiner zylindrischen Wandung die in Umfangsrichtung im selben Winkel angeordnetenradialen Bohrungen 18 zur Aufnahmeder Haltekugeln 8 aufweist. In Richtung des maschinenseitigen Halteteils 1 ist am Boden des Futterkörpers 6 die Ringnut 15 zur Aufnahme der Druckfeder 14 ausgebildet.

Die Fig. 8 zeigt eine sternförmige Außenkontur 19 an der Stirnseite des Bodenabschnitts der Grundaufnahme 3 bzw. im Bereich einer axialen Mündungsöffnung der Aufnahmeöffnung zur Aufnahme des Zapfens 4 des Verbindungsstücks 9. Eine Drehmitnahme der in den Futterkörper 6 eingesetzten Grundaufnahme 3 erfolgt über den am Verbindungsstück 9 (vgl. Fig. 9) ausgebildeten Zapfen 4. Die Schnittstelle 20 zwischen dem Zapfen 4 und der Grundaufnahme 3 ist in Fig. 4 dargestellt. Die sternförmige Außenkontur 19 der Grundaufnahme 3 gewährleistet eine einfache und störungsfreie Fügung des Zapfens 4. Die sternförmige Außenkontur gewährleistet im Besonderen, dass der Zapfen unabhängig vom Positionswinkel bzw. Einschiebewinkel in die Aufnahmeöffnung auf Seiten der Grundaufnahme 3 eingeschoben bzw. eingedreht werden kann, ohne dabei zu verkanten. Beim Auswechseln des (nicht gezeigten) Werkzeugs kann das erfindungsgemäße Schnellspannfutter 7, dessen maschinenseitiges Halteteil 1 mit der Werkzeugmaschinenspindel verschraubt ist, in der Werkzeugmaschine verbleiben. Der Werkzeugwechsel erfolgt über die Schnittstelle 20 zwischen der Grundaufnahme 3 und dem Zapfen 4 des als eine Bundschraube geformten Verbindungsstücks 9. Durch den Eingriff der Haltekugeln 8 in die bzw. die Arretierung der Haltekugeln 8 in der radialen Ausnehmung 13 am Außenumfang der Grundaufnahme 3 ist eine definierte Einstecktiefe der Grundaufnahme 3 in den Futterkörper 6 gewährleistet, die für eine sichere Drehmomentübertragung erforderlich ist.

Die Fig. 9 zeigt das Verbindungsstück 9, die die Form einer Bundschraube hat, mit dem maschinenseitigen Halteteil 1 und dem Zapfen 4. Das maschinenseitige Halteteil 1 weist ein Gewinde 21 auf, das fest in die (nicht gezeigte) Maschinenspindel eingeschraubt wird und zur Drehmomentübertragung von der Maschinenspindel auf das (nicht gezeigte) Werkzeug dient. Die Außenkontur des Zapfens 4 entspricht einem Sechskant und ist für die Übertragung größerer Drehmomente geeignet. Der Zapfen 4 wird über die sternförmige Außenkontur 19 formschlüssig in die Grundaufnahme 3 eingeführt. Die kraftschlüssige Verbindung des maschinenseitigen Halteteils 1 mit der Maschinenspindel erfolgt über den Zapfen 4, über welchen mit einem (nicht gezeigten) Werkzeug das Verbindungsstück 9 betätigt und in die Maschinenspindel eingeschraubt wird.

Zusammenfassend wird ein Schnellspannfutter (7) mit einem zentral angeordneten Verbindungsstück (9) vorgeschlagen, das zur Drehmomentübertragung von einer Werkzeugmaschine auf ein Werkzeug zwischen einem werkzeugmaschinenseitigen Halteteil (1) und einem werkzeugseitigen Halteteil (2) des Schnellspannfutters (7) eingesetzt wird. Das Verbindungsstück (9) in Form einer Bundschraube weist einen Zapfen (4) in Form eines Sechskants auf, welcher formschlüssig in Eingriff mit einer entsprechendengeformten Aufnahmeöffnung auf Seiten des werkzeugseitigen Halteteils (2) bringbar ist.

### Bezugszeichenliste:

- 1: Maschinenseitiges Halteteil
- 2: Werkzeugseitiges Halteteil
- 3: Grundaufnahme
- 4: Zapfen
- 5: Aufnahme
- 6: Futterkörper
- 7: Schnellspannfutter
- 8: Haltekugeln
- 9: Verbindungsstück
- 10: Spannhülse
- 11: Entriegelungsring
- 12: Druckfeder
- 13: Radiale Ausnehmung
- 14: Druckfeder
- 15: Ringnut
- 16: Radiale Bohrung
- 17: Keil
- 18: radiale Bohrung
- 19: Sternförmige Außenkontur
- 20: Schnittstelle
- 21: Gewinde

## Patentansprüche

1. Schnellspannfutter (7) mit einem werkzeugmaschinenseitigen Halteteil (1) zur Ankopplung an eine Werkzeugmaschinenspindel und einem werkzeugseitigen Halteteil (2) zum Halten eines Werkzeugs, **dadurch gekennzeichnet, dass** das werkzeugmaschinenseitige Halteteil (1) und das werkzeugseitige Halteteil (2) zur Drehmomentübertragung über ein zwischen dem werkzeugmaschinenseitigen Halteteil (1) und dem werkzeugseitigen Halteteil (2) zentral angeordnetes Verbindungsstück (9) erfolgt.

2. Schnellspannfutter (7) nach Anspruch 1, **dadurch gekennzeichnet, dass** das drehfest mit dem werkzeugmaschinenseitigen Halteteil (1) verbundene Verbindungsstück (9) die Form einer Bundschraube mit einem Zapfen (4) in der Art einer axialen Verlängerung besitzt, der in form- und/oder kraftschlüssig in eine auf Seiten des werkzeugseitigen Halteteils (2) vorgesehene Aufnahmeöfnung einführbar ist.

3. Schnellspannfutter (7)nach Anspruch 2, **dadurch gekennzeichnet, dass** der Zapfen (4) in der Art eines Außensechskants und die Aufnahmeöffnung auf Seiten des werkzeugseitigen Halteteils (2) in der Art eines Innensechskants geformt sind.

4. Schnellspannfutter nach Anspruch 2 oder 3, **dadurch gekennzeichnet, dass** das die auf Seiten des werkzeugseitigen Halteteils (2) vorgesehene Aufnahmeöffnung im Bereich einer Mündungsöffnung einer sternförmigen Außenkontur (19) besitzt.

5. Schnellspannfutter nach einem der Ansprüche 1 bis 4, **dadurch gekennzeichnet, dass** eine axiale Arretierung des werkzeugseitigen Halteteils (2) am werkzeugmaschinenseitigen Halteteil (1) über Haltekugeln (8) erfolgt, die in einem zwischen das werkzeugmaschinenseitige Halteteil (1) und das werkzeugseitige Halteteil (2) geschalteten Futterköper (6) gelagert sind.

6. Schnellspannfutter nach Anspruch 5, **dadurch gekennzeichnet, dass** das werkzeugseitige Halteteil (2) am Außenumfang eine radiale Ausnehmung (13) für einen Eingriff der Haltekugeln (8) aufweist.

7. Schnellspannfutter nach Anspruch 5 oder 6, **dadurch gekennzeichnet, dass** die Haltekugeln (8) druckfederkraftbeaufschlagt im Futterkörper (6) gehalten werden.

8. Schnellspannfutter nach einem der Ansprüche 5 bis 7, **gekennzeichnet durch** eine den Futterkörper (6) umgreifende, druckfederkraftbeaufschlagte Spannhülse (10) und einen im Futterkörper (6) angeordneten, druckfederkraftbeaufschlagten Entriegelungsring (11) zum radial außenseitigen bzw. radial innenseitigen Halten der Haltekugeln (8).

9. Schnellspannfutter nach Anspruch 8, **dadurch gekennzeichnet, dass** die Haltekugeln (8) über einen radial innenseitig an der Spannhülse (10) vorgesehene Keilfläche (17) eine Druckkraft erfahren.
